Europäisches Patentamt

European Patent Office

Office européen des brevets

(11) Publication number: **0 475 494 A1**

## EUROPEAN PATENT APPLICATION

(21) Application number: **91202157.3**

(22) Date of filing: **23.08.91**

(51) Int. Cl.⁵: **G02B 6/36, G02B 6/28**

(30) Priority: **29.08.90 IT 2167390 U**

(43) Date of publication of application:
**18.03.92 Bulletin 92/12**

(84) Designated Contracting States:
**AT BE CH DE DK ES FR GB GR IT LI LU NL SE**

(71) Applicant: **SIRTI S.p.A.**
**Via G.B. Pirelli, 20**
**Milano(IT)**

(72) Inventor: **Tambosso, Tiziana**
**Via Tarra 5**
**I-20125 Milan(IT)**
Inventor: **Dri, Luca**
**Via V. Veneto, 96**
**I-20091 Bresso(IT)**

(74) Representative: **Henke, Erwin et al**
**Ing.Barzanò & Zanardo Milano S.p.A. Via**
**Borgonuovo, 10**
**I-20121 Milano(IT)**

(54) **Passive coupler for fibre-optics.**

(57) A passive coupler (11) for fibre-optics which enables two or more optical fibres (12) contained in it to be coupled, comprising an inner tubular element (15) within which the optical fibres (12) are fusion-spliced, a centering element (14) supporting the inner tubular element (15), and an outer tubular element (13) containing both the inner tubular element (15) and the centering element (14), wherein the optical fibres (12), both in entering and in leaving the inner tubular element (15), are arranged separate from each other and pass through a pair of internal elements (19,19a) which close the outer tubular element (13).

Preferably, the inner tubular element (15) is of quartz,, the internal closure elements (19,19a) are of heat-shrinkable material and the centering element (14) is of silicone rubber or teflon in 2x2 couplers.

Alternatively, element (17) of protective material are provided for the individual optical fibres (12).

Fig.1

This invention relates to a passive coupler for fibre-optics.

In fibre-optics technology it is known to couple two or more optical fibres such that the power fed into one or more input fibres is divided at the coupling point and re-distributed in the desired coupling ratio between the output optical fibres, which are coupled to the former by said coupling point.

A coupling of this type is obtained for example by a fusion technique in which the aforesaid distribution is achieved by applying heat to fuse the fibres while they are mutually abutting and subjected to slight traction.

This fusion and the simultaneous slight traction exerted on the contacting fibres result in a reduction in the resistant cross-section of the fibres. This increases the danger of their breakage when even a small tensile or flexural force is applied to the coupler.

Certain problems also arise in this type of coupler due to the nature of the constituent material of the optical fibres, ie silica, which has a very low coefficient of thermal expansion. As such fibres are contained and protected within structures which generally have a much higher coefficient of thermal expansion than the optical fibre material, the fibres can break. In this respect, temperature changes, such as ambient temperature changes, result in high and dangerous forces being transmitted to the fibres, which can cause them to break.

An object of the present invention is to provide a coupler which solves the aforesaid problems relative to the creation of forces which can cause breakage of the optical fibres.

A further object is to provide a coupler of such a construction that it can be handled safely and be easily installed as a component of fibre-optics networks or of other optical equipment.

These objects are attained according to the invention by a passive coupler for fibre-optics of the type which enables at least two optical fibres contained therein to be coupled, and comprising an inner tubular element within which said at least two optical fibres are fusion-spliced, a centering element supporting said tubular element, and an outer tubular element containing both said inner tubular element and said centering element, wherein said at least two optical fibres, both in entering and in leaving said inner tubular element, are arranged separate from each other and pass through a pair of internal elements which close said outer tubular element.

Preferably, said inner tubular element is of quartz construction, said centering element is of silicone rubber or teflon construction, and said pair of internal closure elements are constructed of heat-shrinkable material.

The characteristics and advantages of the present invention will be more apparent from the following description given with reference to the accompanying schematic drawings, in which:

Figure 1 is a longitudinal section through a first embodiment of a passive coupler for fibre-optics according to the present invention;

Figure 2 is a longitudinal section through a second embodiment of a coupler according to the present invention;

Figure 3 is a longitudinal section through a third embodiment of a coupler according to the present invention;

Figure 4 is a longitudinal section through a fourth embodiment of a coupler according to the present invention.

In the figures the reference numeral 11 indicates overall a passive fibre-optics coupler with which a plurality of optical fibres 12 can be coupled. These optical fibres must be at least two in number, can be of any type (monomodal, multimodal etc.), and can either possess or not possess single or composite external protection.

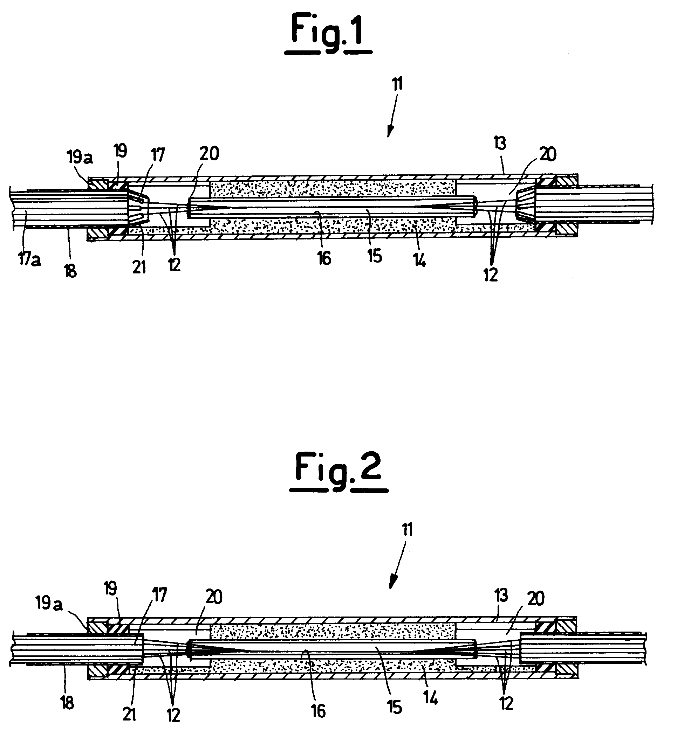

Figure 1 shows a first embodiment of a passive coupler comprising an outer tubular containing element 13 which contains at least one centering element 14 supporting an inner tubular element 15 of quartz or other suitable material within which the input and output optical fibres 12 are fusion-coupled.

In this embodiment the outer tubular element 13 is in the form of an anodized aluminium tube of square cross-section, but it can be of any other cross-section or appropriate material. In contrast, the centering element 14 is of silicone rubber or another suitable material and has a round external shape so that it can be inserted into the outer tubular element 13. Within the centering element 14 there is a longitudinal through hole 16 housing the internal tubular quartz element 15.

Each of the input and output optical fibres 12 passes within a cable of protective material contained within an external containing tube 18 supported by internal elements 19, 19a which close the outer tubular element 13.

The protective cable can consist of a simple tube 17 of teflon or other suitable material such as in Figure 2, or of a tube 17 of teflon or other suitable material covered externally with a polyurethane sheath and provided with a kevlar reinforcement 17a, as in Figure 1.

The external containing tube 18 is constructed of a heat-shrinkable material such as a soft elastomer, as are the more inner closure elements 19, whereas the second inner elements 19a, which face outwards from the coupler and form the effective closure as they are securely positioned by an adhesive, are constructed for example of aluminium.

The centering element 14 comprises two apertures 20 which are filled with a suitable material, such as silicone, to protect the fibres 12. This is because in this region the fibres are covered only with their primary coating.

The containing tube 18 is of short length and has a portion 21 projecting towards the centering element 14. Within said portion 21 the individual fibres 12 are protected only by the tube 17 of teflon or other suitable material (Figure 2 and Figure 1). That end of the tubes 17 and 17a which enters the containing tube 18 is compressed radially to make them rigid with each other.

In the embodiment shown in Figure 1 in which the cables consist externally of polyurethane and internally of teflon and kevlar the polyurethane parts contained within the heat-shrinkable containing tube 18 must be bonded together with a suitable adhesive material, and the teflon tubes 17 must be fixed with suitable adhesive in the portion 21 where the cables are not provided with the polyurethane sheath or the kevlar.

Figure 2 shows a second embodiment of the passive coupler for fibre-optics according to the present invention in which the individual fibres 12 entering and leaving the tubular quartz element 15 are directly inserted through a tube 17 of protective material, which passes through the containing tube 18 and through the two internal elements 19 and 19a which close the tubular element. The tube 17 of protective material is preferably constructed of teflon.

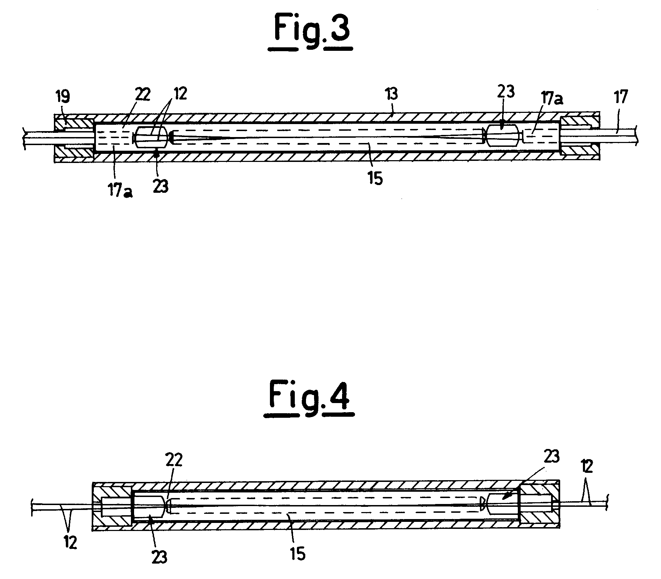

Figures 3 and 4 show two further embodiments of the coupler according to the present invention, and specifically 2x2 couplers in which the optical fibres 12 are protected at the exit of the coupler by a teflon tube 17 (Figure 3), or indeed have no protection (Figure 4).

In Figure 3, the quartz tube 15, which protects the fibre coupling region, is covered by a sheath 22 of teflon or other suitable material which in this case besides performing the function of the centering element 14 of Figures 1 and 2 protects the coupler from vibration and impact.

As in the aforegoing embodiments, the teflon sheath 22 comprises two apertures 23 to be filled with suitable material such as silicone, to protect the fibres 12 in this region, in which they are protected only by their primary coating.

The protection tubes 17 are inserted into the teflon sheath 22 by a short portion 17a and are then fixed in by a suitable adhesive material.

The protection tubes 17 leaving the outer tubular element 13 are contained within internal closure elements 19.

In Figure 4 the quartz tube 15 which protects the coupler is covered by the teflon sheath 22, which is also provided with side apertures 23. The tubes 17 or the portions 17a fixed with adhesive material are however not present.

In the latter embodiment the coupler is less resistant to tractive forces, but being of smaller mechanical dimensions is required in certain special applications.

The external containing tube 13 contains in a secure and supported manner both the centering support element for the inner tubular element and the ends of the optical fibres.

A coupler according to the present invention has the advantages of high hermeticity, corrosion resistance and elimination of vibration because of the end closures and the various support elements provided within it.

It also has good mechanical strength and impact resistance, strictly connected with its lightness which derives from the materials and its particular structure.

The various constituent materials of the cables and their fixings also result in a high degree of damping of externally induced vibration.

Advantageously, the expedients used in forming the parts and in their assembly enable the coupler of the present invention to withstand the most severe ambient temperature variations without these resulting in modifications in the characteristics of the optical fibres or in limitations on their dimensions and/or transmissive properties.

**Claims**

1. A passive coupler for fibre-optics of the type which enables at least two optical fibres contained therein to be coupled, comprising an inner tubular element within which said at least two optical fibres are fusion-spliced, a centering element supporting said tubular element, and an outer tubular element containing both said inner tubular element and said centering element, wherein said at least two optical fibres, both in entering and in leaving said inner tubular element, are arranged separate from each other and pass through a pair of internal elements which close said outer tubular element.

2. A coupler as claimed in claim 1, characterised in that said inner tubular element is of quartz construction.

3. A coupler as claimed in claim 1, characterised in that said internal closure elements through which said at least two optical fibres pass are constructed of heat-shrinkable material.

4. A coupler am claimed in claim 1, characterised in that said internal closure elements through which said at least two optical fibres pass are constructed of a metal material bonded to said outer tubular element.

5. A coupler as claimed in claim 1, characterised in that said at least two optical fibres, both in entering and in leaving, are supported within said closure elements by the interposition of an external tube of heat-shrinkable material.

6. A coupler as claimed in claim 1, characterised in that said centering element is of silicone rubber construction.

7. A coupler as claimed in claim 1, characterised in that said at least two optical fibres emerging from said pair of internal closure elements and directed towards said inner tubular element are covered with at least one cable of protective material.

8. A coupler as claimed in claim 7, characterised in that said at least one cable of protective material is of teflon construction.

9. A coupler as claimed in claim 7, characterised in that said at least one cable of protective material is constructed of teflon covered with kevlar thread and enclosed in a sheath of plastics material.

10. A coupler as claimed in claim 1, characterised in that portions of said at least two optical fibres passing through and supported within said pair of internal closure elements are contained within a sheath of protective material.

11. A coupler as claimed in claim 5, characterised in that a portion of said external tube of heat-shrinkable material extends towards said inner tubular element, a filling material being arranged within said said portion.

12. A coupler as claimed in claim 11, characterised in that said at least two optical fibres contained within said portion of said external tube are themselves contained in protective cables.

# Fig.1

# Fig.2

# Fig.3

# Fig.4

European Patent
Office

# EUROPEAN SEARCH REPORT

## DOCUMENTS CONSIDERED TO BE RELEVANT

EP 91202157.3

| Category | Citation of document with indication, where appropriate, of relevant passages | Relevant to claim | CLASSIFICATION OF THE APPLICATION (Int. Cl.5) |
|---|---|---|---|
| Y | FR - A - 2 632 076 (COMPAGNIE LYONNAISE DE TRANSMISSION OPTIQUES) * Page 1, line 30 - page 2, line 15; fig. 1,2; claims 1-3 * | 1,2,6, 7,10 | G 02 B 6/36 G 02 B 6/28 |
| A | | 3,4,8 | |
| Y | US - A - 4 906 068 (OLSON et al.) * Fig. 3 * | 1,2,6, 7,10 | |
| A | EP - A - 0 106 116 (INTERNATIONAL STANDARD ELECTRIC CORPORATION) * Fig. 1-3 * | 1,7,10 | |
| A | US - A - 4 714 316 (MOORE et al.) * Fig. 1-5 * | 1,2 | |
| | | | TECHNICAL FIELDS SEARCHED (Int. Cl.5) |
| | | | G 02 B 6/00 |

The present search report has been drawn up for all claims

| Place of search | Date of completion of the search | Examiner |
|---|---|---|
| VIENNA | 25-11-1991 | GRONAU |

EPO FORM 1503 03.82 (P0401)